# EUROPÄISCHE PATENTSCHRIFT

(11) **EP 3 237 786 B1**
(45) Veröffentlichungstag und Bekanntmachung des Hinweises auf die Patenterteilung: **19.05.2021**
(21) Anmeldenummer: 15808348.5
(22) Anmeldetag: 21.11.2015
(51) Int. Cl.: E03F 5/04

(54) **DICHTEINSATZ FÜR EINEN WASSERABLAUF**
SEALING INSERT FOR A WATER DRAIN
INSERT D'ÉTANCHÉITÉ POUR CHASSE D'EAU

(30) Priorität: 23.12.2014 DE 102014119582
(43) Veröffentlichungstag der Anmeldung: 01.11.2017
(73) Patentinhaber: wedi GmbH, 48282 Emsdetten (DE)
(72) Erfinder: WEDI, Stephan, 48282 Emsdetten (DE)
(74) Vertreter: Dr. Träger & Strautmann PAe PartG mbB
(86) Internationale Anmeldenummer: PCT/EP2015/002339
(87) Internationale Veröffentlichungsnummer: WO 2016/102038

(56) Entgegenhaltungen:
- DE-U1-202004 017 607
- DE-U1-202009 015 791
- DE-U1-202010 007 534

## Beschreibung

Die Erfindung betrifft einen Dichteinsatz für einen Wasserablauf gemäß Anspruch 1.

Solche Dichteinsätze werden beispielsweise eingesetzt um einen in ein Duschbodenelement eingesetzten Ablauftopf abzudichten.

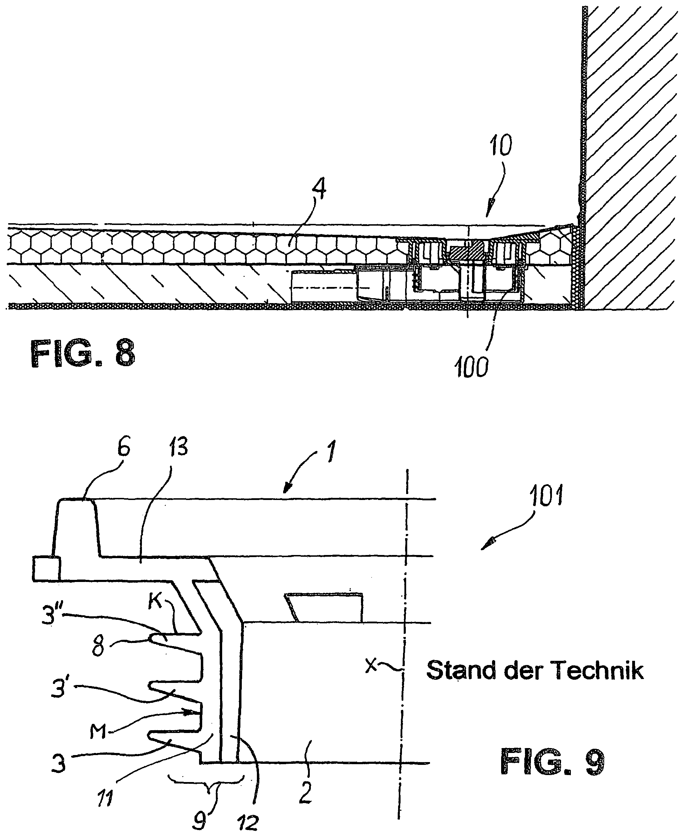

Ein Dichteinsatz 101 gemäß dem Stand der Technik (vgl. Fig. 9) ist durch einen Ringkorpus 1 gebildet, welcher eine Seitenwand 9 und einen Kragen 13 mit einem nach oben ragenden, in seinem Querschnitt etwa trapezförmigen Dichtring 6 umfasst, dessen kleinere Trapezbasis nach oben zeigt. Die Außenmantelfläche M der Seitenwand 9 ist zylindrisch.

Die Begriffe: "oben", "obere", "unten", "untere" bzw. "unterhalb" beziehen sich auf die Anordnung des Dichteinsatzes 101 in seiner Einbaulage, bei der der Kragen 13 mit dem Dichtring 6 dem Duschbodenelement zugewandt ist.

Die Seitenwand 9 besteht aus einer äußeren, elastomeren Wandungsschicht 11 mit drei übereinander liegenden Dichtlippen 3, 3', 3" sowie aus einer inneren, steiferen Wandungsschicht 12. Die beiden Wandungsschichten 11, 12 können miteinander fest, untrennbar verbunden sein, oder die Wandungsschicht 11 ist auf die Wandungsschicht 12 nachträglich aufgeschoben. Der bekannte Dichteinsatz hat sich in der Praxis gut bewährt, jedoch besteht Bedarf an einer Verbesserung der Dichteigenschaften. Der Dichteinsatz 101 zeichnet sich durch relativ schmale Dichtlippen von demselben Querschnitt aus. Die Dichtlippen können bei der Montage des Ringkorpus und anschließendem Anziehen mit Schraubelementen umknicken.

Aus DE 20 2010 007 534 U1 und aus DE 20 2009 015 791 U1 ist jeweils ein Dichteinsatz für einen Wasserablauf bekannt, der einen Rohrstutzen sowie daran angeordnete Dichtlippen umfasst. Die Dichtlippen haben eine leicht konische Kontur und weisen keine besondere, die Stabilität erhöhende Kontur auf.

Es stellt sich daher die Aufgabe, einen verbesserten, neuartigen Dichteinsatz der eingangs genannten Art zu konzipieren, dessen Dichtlippen stabiler sind und sich beim Einmontieren in den Wasserablauf zum einen kontrolliert deformieren und zum anderen eine hohe Rückstellkraft in ihre Ausgangsposition aufweisen, so dass die äußeren Bereiche der Dichtlippen einen dauerhaft hohen Druck auf die abzudichtende Verbindungsstelle ausüben.

Diese Aufgabe ist durch einen gattungsgemäßen Dichteinsatz mit den Merkmalen des Anspruchs 1 gelöst.

Die Kegelmantel-Abschnitte verjüngen sich in Richtung Kragen, so dass die Seitenwand ihre größte Dicke bei einer Basis der unteren Dichtlippen annimmt. Der äußere Durchmesser der Dichtlippen ist aus funktionalen Gründen größer als der Durchmesser einer Öffnung, in welche der Dichteinsatz eingesetzt wird. Da der Kragen des Dichteinsatzes die Dichtlippen überragt, kann der Dichteinsatz nur in einer Richtung, nämlich mit den Dichtlippen zuerst, in die Öffnung eingesetzt werden. Hierbei werden die Dichtlippen in ihrem Außenbereich entgegen der Einsetzrichtung verformt. Die sich an die Dichtlippen anschließenden Kegelmantel-Abschnitte stützen hierbei die Dichtlippen ab. Beim Herausziehen des Dichteinsatzes werden die Dichtlippen in die entgegengesetzte Richtung verformt. Im Ergebnis ist hierdurch der Widerstand und die Rückstellkraft beim Einsetzen und bei eingesetztem Dichteinsatz relativ hoch und beim Ausbau, beispielsweise für Reparaturarbeiten, relativ niedrig.

Als besonders vorteilhaft hat sich ein Querschnitt der Seitenwand erwiesen, bei dem wenigstens ein Kegelmantel-Abschnitt, im Weiteren als "Schräge" bezeichnet, in eine wulstartige Verdickung übergeht, welche sich wiederum von unten an die Basis der Dichtlippe anschließt. Das Vorhandensein der Verdickung kann ein Umknicken der unterhalb der Verdickung liegenden Dichtlippe beim Einsetzen des Dichteinsatzes wirksam verhindern. So kann die zuerst verformte, elastische Dichtlippe infolge der Rückstellkraft wieder ihre ursprüngliche Form zurück finden.

Die Dichtlippen können mit ihren Scheiteln bzw. Außenkanten eine zylindrische oder konische Fläche beschreiben, d. h. sie können in einem gemeinsamen oder sich stets verkleinernden bzw. vergrößernden Radius, ausgehend von einer Längsachse des Ringkorpus, liegen. In Abhängigkeit vom Einsatzzweck kann somit vorgesehen sein, dass alle Dichtlippen einen gleich großen äußeren Durchmesser aufweisen. Es kann aber auch vorgesehen sein, dass der Durchmesser von Dichtlippe zu Dichtlippe größer oder kleiner wird, so dass Dichtlippen gemeinsam eine Art Konus ausbilden.

Vorzugsweise entspricht die Breite der Dichtlippen, gemessen zwischen der Basis der Dichtlippe und ihrem Scheitel etwa dem Abstand zwischen zwei übereinander liegenden Scheiteln.

Die äußere, elastomere Wandungsschicht kann aus Thermoplasten hergestellt sein, welche beispielsweise auf die härtere innere Wandungsschicht auf bekannte Weise angespritzt sind, oder als vorgefertigtes Formteil nachträglich aufgeschoben wird. Die innere Wandungsschicht kann ebenso aus Thermoplasten bestehen, deren Härtegrad entsprechend eingestellt ist. Die innere Wandungsschicht kann auch aus einem Duroplast oder Metall bestehen.

Schließlich ist es möglich, die die Dichtlippen aufweisende Seitenwand einstückig mit dem Kragen und dem oberen Dichtring anzufertigen. Dabei können die für den Dichtkontakt vorgesehenen Dichtlippen wenigstens teilweise elastisch verformbar sein. Der Härtegrad des übrigen Materials des Ringkorpus kann so eingestellt sein, dass die Stabilität des Dichteinsatzes gewährt ist.

Die Dichteinsätze weisen eine an den Ablauftopf angepasste Kontur auf. Insbesondere kann diese Kontur kreisrund oder oval sein.

Ausführungsbeispiele der Erfindung sind anhand der Zeichnung näher erläutert. Die Figuren zeigen:
- Fig. 1: einen ovalen Dichteinsatz gemäß Erfindung in einer Draufsicht auf seinen Dichtring;
- Fig. 2: einen Schnitt A-A gemäß Fig. 1;
- Figuren 3 und 4: einen kreisrunden Dichteinsatz gemäß Erfindung, jeweils in einer perspektivischen Ansicht;
- Fig. 5: einen vergrößerten längsaxialen Schnitt durch den Dichteinsatz gemäß Erfindung, in einer ersten Ausführung;
- Fig. 6: einen vergrößerten längsaxialen Schnitt durch den Dichteinsatz gemäß Erfindung, in einer zweiten, optimierten Ausführung;
- Fig. 7: einen vergrößerten längsaxialen Schnitt durch den Dichteinsatz, in einer massiven Ausführung;
- Fig. 8: Einbaulage des Dichteinsatzes gemäß Erfindung, in einem schematischen Schnitt im Bodenbereich einer Duschzelle; und
- Fig. 9: einen Dichteinsatz gemäß dem Stand der Technik, in einem Schnitt.

Gleiche oder ähnliche Elemente können in den nachfolgenden Figuren mit gleichen oder ähnlichen Bezugszeichen versehen sein.

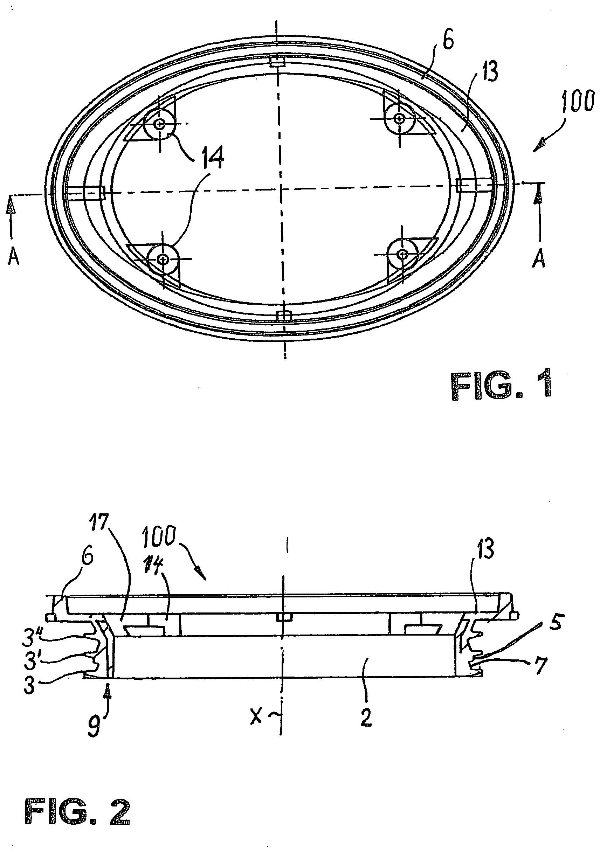

In den Figuren 1 und 2 ist ein Dichteinsatz 100 in seiner ovalen Ausführungsform dargestellt, umfassend den Ringkorpus 1 mit Seitenwand 9 und dem umlaufenden oberen Kragen 13 mit nach oben ragendem Dichtring 6. Die Seitenwand 13 bildet eine zentrale Durchgangsöffnung 2.

Die Seitenwand 13 besteht aus zwei zusammengefügten, bzw. übereinander geschobenen Wandungsschichten 11, 12, von denen die eine, äußere Wandungsschicht 11 elastomer ist und drei übereinander liegende Dichtlippen 3, 3', 3" mit einschließt. Die andere, innere Wandungsschicht 12 besteht aus einem stabilen, relativ harten Material.

An einem schrägen, oberen Abschnitt 17 der Seitenwand 9 sind an sich bekannte, nach innen gekröpfte Schraubaufnahmeelemente 14 angeordnet.

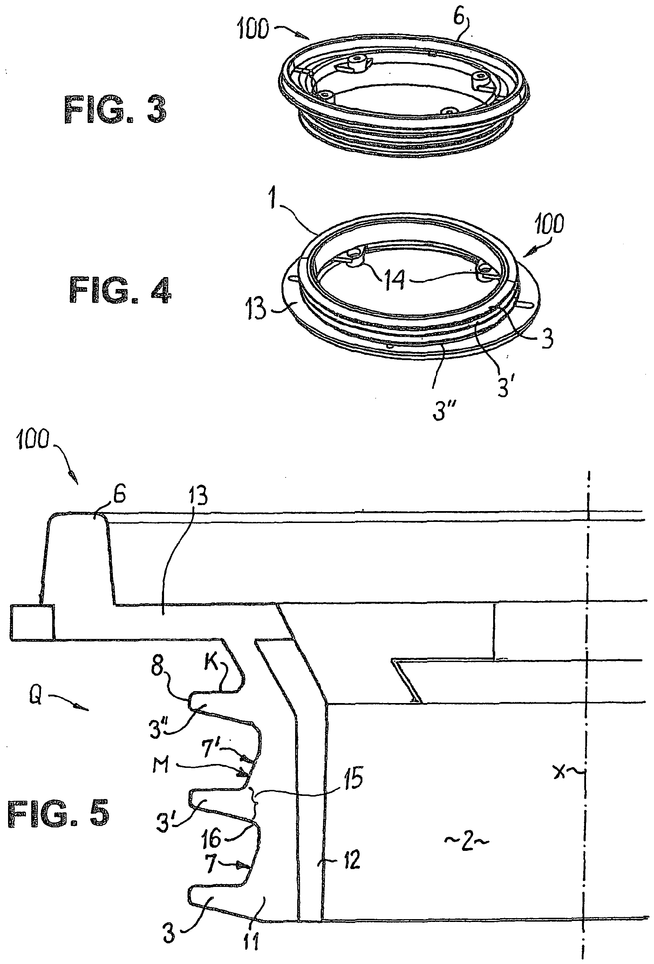

Die Fig. 5 zeigt eine optimierte Geometrie (Umriss) der Seitenwand 9 in einem längsaxialen Schnitt Q durch den Ringkorpus 1. Der Dichteinsatz 100 weist drei Dichtlippen 3, 3', 3" auf. Die Dichtlippen 3, 3', 3" weisen jeweils eine konische, in einen Scheitel 8 auslaufende Kontur K auf, welche in eine speziell geformte Außenmantelfläche M der Seitenwand 9, nämlich in zwei sich nach oben verjüngende Kegelmantel-Abschnitte 7, 7" (Schräge) übergeht. Wie die Fig. 5 zeigt, sind die Dichtlippen 3, 3', 3" dicker gegenüber den Dichtlippen gemäß dem Stand der Technik (vergl. Fig. 9) ausgeführt. Vorteilhaft ist, dass die Schrägen 7, 7" jeweils über eine konkave Rundung 16 in eine breitere Basis 15 der Dichtlippe 3, 3', 3" übergehen.

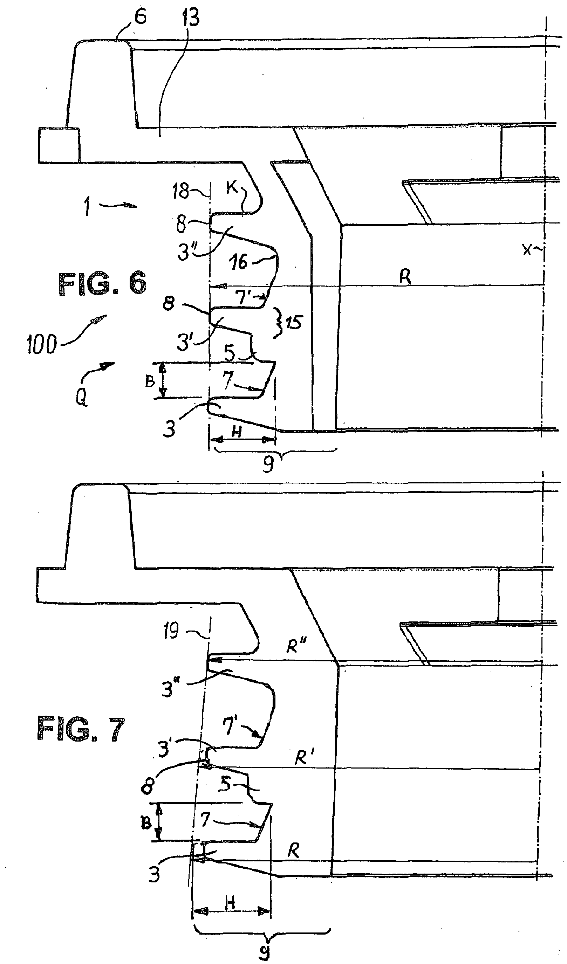

Die Figuren 6 und 7 zeigen eine insbesondere vorteilhafte Ausführung, bei der sich an die untere Schräge 7 eine wulstartige Verdickung 5 anschließt, welche wiederum von unten an die Basis 15 der mittleren Dichtlippe 3' übergeht. Die Dichtlippe 3 weist eine Höhe H auf, die größer ist als ein zwischen der Dichtlippe 3 und der Verdickung 5 vorgesehener Abstand B. Dadurch wird die Verformung der untersten Dichtlippe 3 wesentlich begrenzt und ein Umknicken der Dichtlippe begrenzt. Beim Einsetzen in eine Öffnung kann sich die Dichtlippe 3 somit nicht vollständig an die Wandung 11 anlehnen, der Scheitelbereich der Dichtlippe 3 wird vielmehr von der wulstartigen Verdickung 5 abgestützt.

Da die Umknickgefahr bei der ersten in die Öffnung eines Bodens oder einer Bodenplatte einzusetzenden Dichtlippe 3 am größten ist, ist im Ausführungsbeispiel eine wulstartige Verdickung 5 nur unterhalb der zweiten Dichtlippe 3' vorgesehen. Nicht ausgeschlossen ist jedoch, dass auch die Dichtlippen 3' und/oder 3" durch weitere wulstartige Verdickungen abgestützt werden.

Gemäß Figuren 6 und 7 liegen die Scheitel 8 der übereinander liegenden Dichtlippen 3, 3', 3" entlang einer mit 18 bezeichneten Linie, die in einem gemeinsamen Radius R, bemessen von einer Längsachse X des Ringkorpus 1, also parallel zur Längsachse X angeordnet ist.

Die Fig. 7 zeigt aber auch eine abweichende Ausführung, bei der die Scheitel 8 (mit Strichlinie bezeichnet) entlang einer leicht geneigten Linie 19 angeordnet sind. Demnach beschreiben die Scheitel 8 sich nach oben verkleinernde Radien R, R', R", ausgehend von der besagten Längsachse X des Ringkorpus 1.

Die Dichtlippen 3, 3', 3" können gestufte Härte- bzw. Weichgrade aufweisen. Beispielsweise kann die obere Dichtlippe etwas härter als die untere ausgeführt sein.

Die Figuren 3 und 4 zeigen den Dichteinsatz 100 in seiner kreisrunden, rotationssymmetrischen Ausführung. Die Bezugszahlen des kreisrunden Dichteinsatzes entsprechen den bereits beschriebenen Teilen des ovalen Dichteinsatzes.

Die Fig. 8 zeigt den Dichteinsatz 100 gemäß Erfindung, eingebaut in einen waagerechten Wasserablauf 10 einer barrierefreien Dusche. Mit Bezugszahl 4 ist ein plattenförmiges Duschbodenelement bezeichnet.

**Bezugszeichenliste:**

| | |
|---|---|
| 1 | Ringkorpus |
| 2 | Durchqanqsöffnunq |
| 3, 3', 3" | Dichtlippe |
| 4 | Duschbodenelement |
| 5 | Verdickung |
| 6 | Dichtring |
| 7 | Keqelmantel-Abschnitt (Schräge) |
| 8 | Scheitel |
| 9 | Seitenwand |
| 10 | Wasserablauf |
| 11 | Wandunqsschicht |
| 12 | Wandunqsschicht |
| 13 | Kragen |
| 14 | Schraubaufnahmeelement |
| 15 | Basis |
| 16 | konkave Rundung |
| 17 | Abschnitt (v. 9) |
| 18 | Linie |
| 19 | Linie |
| | |
| 100, 101 | Dichteinsatz |
| | |
| B | Abstand |
| H | Höhe |
| M | Außenmantelfläche |
| K | Kontur |
| Q | Schnitt |
| A - A | Schnitt |
| R; R'; R" | Radius |
| X | Längsachse |

## Patentansprüche

1. Dichteinsatz (100) für einen Wasserablauf (10), umfassend:
- einen Ringkorpus (1) mit einer Seitenwand (9) und einem umlaufenden Kragen (13);
- wenigstens eine an der Seitenwand (9) angeordnete, nach außen zeigende Dichtlippe (3, 3', 3"),
- wobei die wenigstens eine Dichtlippe (3, 3', 3") in einem längsaxialen Schnitt (Q) durch den Dichteinsatz (100) eine konische, in einen Scheitel (8) auslaufende Kontur (K) aufweist, welche in eine Außenmantelfläche (M) des Ringkorpus (1) übergeht,
- und wobei die Seitenwand (9) des Ringkorpus (1) einen an die wenigstens eine Dichtlippe (3, 3', 3") angrenzenden Kegelmantel-Abschnitt (7, 7') aufweist,
**dadurch gekennzeichnet, dass** der Kegelmantel-Abschnitt (7, 7') sich in Richtung Kragen (13) verjüngt.

2. Dichteinsatz (100) nach Anspruch 1, **dadurch gekennzeichnet, dass** an den Kegelmantel-Abschnitt (7, 7') sich wenigstens eine umlaufende, wulstartige, in die Dichtlippe (3', 3") übergehende Verdickung (5), anschließt.

3. Dichteinsatz (100) nach Anspruch 2, **dadurch gekennzeichnet, dass** er drei übereinander angeordnete Dichtlippen aufweist, wobei die mittlere Dichtlippe die Verdickung (5) aufweist, wobei die untere Dichtlippe eine Höhe (H) aufweist, die im längsaxialen Schnitt (Q) definiert ist durch den Abstand ihres Scheitels (8) zu ihrem Schnittpunkt mit dem oben anschließenden Kegelmantelabschnitt (7, 7'), und die Höhe (H) größer ist, als ein zwischen der unteren Dichtlippe (3, 3', 3") und der Verdickung (5) der oberen Dichtlippe vorgesehener Abstand (B), so dass sich die in Richtung Verdickung (5) umknickende untere Dichtlippe (3, 3', 3") im Bereich ihres Scheitels (8) an der Verdickung (5) abstützt.

4. Dichteinsatz (100) mit einem kreisförmigen Ringkorpus nach einem der Ansprüche 1 bis 3, **dadurch gekennzeichnet, dass** drei übereinander liegende Dichtlippen (3, 3', 3") vorgesehen sind und die Scheitel (8) übereinander liegender Dichtlippen (3, 3', 3") - im längsaxialen Schnitt (Q) durch den Dichteinsatz (100) - in einem gemeinsamen Radius (R), ausgehend von einer Längsachse (X) des Ringkorpus (1), liegen.

5. Dichteinsatz (100) mit einem kreisförmigen Ringkorpus nach einem der Ansprüche 1 bis 3, **dadurch gekennzeichnet, dass** drei übereinander liegende Dichtlippen (3, 3', 3") vorgesehen sind und die Scheitel (8) der übereinander liegenden Dichtlippen (3, 3', 3") - im längsaxialen Schnitt (Q) durch den Dichteinsatz (100) - in unterschiedlichen Radien (R, R', R"), ausgehend von einer ängsachse (X) des Ringkorpus (1), liegen.

6. Dichteinsatz (100) nach einem der Ansprüche 1 bis 5, **dadurch gekennzeichnet, dass** die Seitenwand (9) aus zwei miteinander fest gefügten Wandungsschichten (11; 12) besteht.

7. Dichteinsatz (100) nach Anspruch 6, **dadurch gekennzeichnet, dass** die eine Wandungsschicht (11) aus elastomerem Material besteht und die Dichtlippen (3, 3', 3") mit einschließt, dagegen die andere Wandungsschicht (12) aus härterem Material als das der elastomeren Wandungsschicht (11) besteht.

8. Dichteinsatz (100) nach einem der Ansprüche 1 bis 5, **dadurch gekennzeichnet, dass** der Ringkorpus (1) in einem Materialstück gefertigt ist, wobei die für den Dichtkontakt vorgesehenen Dichtlippen (3, 3', 3"), wenigstens teilweise elastisch verformbar sind, dagegen das übrige Material des Ringkorpus (1) steifer ist.

## Claims

1. A sealing insert (100) for a water outlet (10), said sealing insert comprising:
- an annular body (1) which has a side wall (9) and a peripheral collar (13),
- at least one sealing lip (3, 3', 3") which is arranged on the side wall (9) and points outward,
- wherein in a longitudinal-axial section (Q) through the sealing insert (100), the at least one sealing lip (3, 3', 3") comprises a conical contour (K) which ends in an apex (8) and transitions into an outer lateral surface (M) of the annular body (1),
- and wherein the side wall (9) of the annular body (1) has a cone surface portion (7, 7') adjoining the at least one sealing lip (3, 3', 3"),
**characterized in that** the cone surface portion (7, 7') tapers in the direction of the collar (13).

2. The sealing insert (100) according to claim 1, **characterized in that** at least one peripheral, bead-like thickening (5), which transitions into the sealing lip (3', 3"), adjoins the cone surface portion (7, 7').

3. The sealing insert (100) according to claim 2, **characterized in that** it has three sealing lips arranged one above the other, wherein the middle sealing lip has the thickening (5), wherein the lower sealing lip has a height (H) defined in the longitudinal-axial section (Q) by the distance from its apex (8) to the point of its intersection with the upper adjacent cone surface portion (7, 7'), and the height (H) is greater than a spacing (B) provided between the lower sealing lip (3, 3', 3") and the thickening (5) of the upper sealing lip, so that the lower sealing lip (3, 3', 3") which folds over in the direction of the thickening (5) is supported on the thickening (5) in the region of its apex (8).

4. The sealing insert (100) having a circular annular body according to one of the claims 1 to 3, **characterized in that** three sealing lips (3, 3', 3") located one on top of another are provided and the apices (8) of sealing lips (3, 3', 3") located one on top of another are located - in the longitudinal-axial section (Q) through the sealing insert (100) - within a common radius (R), proceeding from a longitudinal axis (X) of the annular body (1).

5. The sealing insert (100) having a circular annular body according to one of the claims 1 to 3, **characterized in that** three sealing lips (3, 3', 3") located one on top of another are provided and the apices (8) of the sealing lips (3, 3', 3") located one on top of another are located - in the longitudinal-axial section (Q) through the sealing insert (100) - within different radii (R, R', R"), proceeding from a longitudinal axis (X) of the annular body (1).

6. The sealing insert (100) according to one of claims 1 to 5, **characterized in that** the side wall (9) consists of two wall layers (11; 12) which are firmly joined to one another.

7. The sealing insert (100) according to claim 6, **characterized in that** the one wall layer (11) consists of elastomer material and incorporates the sealing lips (3, 3', 3"), whereas the other wall layer (12) consists of material that is harder than that of the elastomer wall layer (11).

8. The sealing insert (100) according to one of claims 1 to 5, **characterized in that** the annular body (1) is produced in one material piece, wherein the sealing lips (3, 3', 3") provided for the sealing contact are elastically deformable at least in part, whereas the remaining material of the annular body (1) is more rigid.

## Revendications

1. Insert d'étanchéité (100) pour une évacuation d'eau (10), comprenant:
- un corps annulaire (1) comprenant une paroi latérale (9) et un rebord périphérique (13) ;
- au moins une lèvre d'étanchéité (3, 3', 3") orientée vers l'extérieur, disposée au niveau de la paroi latérale (9),
- l'au moins une lèvre d'étanchéité (3, 3', 3") présentant, en coupe axiale longitudinale (Q) à travers l'insert d'étanchéité (100), un contour conique (K) se terminant par un sommet (8), qui se prolonge par une surface d'enveloppe extérieure (M) du corps annulaire (1),
- et la paroi latérale (9) du corps annulaire (1) présentant une portion d'enveloppe conique (7, 7') adjacente à l'au moins une lèvre d'étanchéité (3, 3', 3"),
**caractérisé en ce que** la portion d'enveloppe conique (7, 7') se rétrécit dans la direction du rebord (13).

2. Insert d'étanchéité (100) selon la revendication 1, **caractérisé en ce qu'au** moins un épaississement périphérique (5), de type bourrelet, se prolongeant par la lèvre d'étanchéité (3', 3"), se raccorde à la portion d'enveloppe conique (7, 7').

3. Insert d'étanchéité (100) selon la revendication 2, **caractérisé en ce qu'il** présente trois lèvres d'étanchéité disposées les unes au-dessus des autres, la lèvre d'étanchéité centrale présentant l'épaississement (5), la lèvre d'étanchéité inférieure présentant une hauteur (H) qui est définie en coupe longitudinale axiale (Q) par la distance de son sommet (8) à son point d'intersection avec la portion d'enveloppe conique (7, 7') se raccordant en haut, et la hauteur (H) étant supérieure à une distance (B) prévue entre la lèvre d'étanchéité inférieure (3, 3', 3") et l'épaississement (5) de la lèvre d'étanchéité supérieure, de telle sorte que la lèvre d'étanchéité inférieure (3, 3', 3") se recourbant dans la direction de l'épaississement (5) s'appuie contre l'épaississement (5) dans la région de son sommet (8).

4. Insert d'étanchéité (100) comprenant un corps annulaire de forme circulaire selon l'une quelconque des revendications 1 à 3, **caractérisé en ce que** trois lèvres d'étanchéité (3, 3', 3") disposées les unes au-dessus des autres sont prévues, et les sommets (8) des lèvres d'étanchéité (3, 3', 3") disposées les unes au-dessus des autres - en coupe axiale longitudinale (Q) à travers l'insert d'étanchéité (100) - sont situés dans un rayon commun (R), à partir d'un axe longitudinal (X) du corps annulaire (1).

5. Insert d'étanchéité (100) comprenant un corps annulaire de forme circulaire selon l'une quelconque des revendications 1 à 3, **caractérisé en ce que** trois lèvres d'étanchéité (3, 3', 3") disposées les unes au-dessus des autres sont prévues, et les sommets (8) des lèvres d'étanchéité (3, 3', 3") disposées les unes au-dessus des autres - en coupe axiale longitudinale (Q) à travers l'insert d'étanchéité (100) - sont situés dans des rayons différents (R, R', R") à partir d'un axe longitudinal (X) du corps annulaire (1).

6. Insert d'étanchéité (100) selon l'une quelconque des revendications 1 à 5, **caractérisé en ce que** la paroi latérale (9) se compose de deux couches de paroi (11; 12) assemblées fixement l'une à l'autre.

7. Insert d'étanchéité (100) selon la revendication 6, **caractérisé en ce que** l'une des couches de paroi (11) se compose d'un matériau élastomère et inclut les lèvres d'étanchéité (3, 3', 3"), tandis que l'autre couche de paroi (12) se compose d'un matériau plus dur que celui de la couche de paroi élastomère (11).

8. Insert d'étanchéité (100) selon l'une quelconque des revendications 1 à 5, **caractérisé en ce que** le corps annulaire (1) est fabriqué en une pièce de matériau, les lèvres d'étanchéité (3, 3', 3") prévues pour le contact étanche pouvant être déformées au moins en partie élastiquement tandis que le reste du matériau du corps annulaire (1) est plus rigide.
